# EUROPÄISCHE PATENTSCHRIFT

(11) **EP 1 191 270 B1**
(45) Veröffentlichungstag und Bekanntmachung des Hinweises auf die Patenterteilung: **24.11.2004**
(21) Anmeldenummer: 00120930.3
(22) Anmeldetag: 26.09.2000
(51) Int. Cl.: F16L 33/02

(54) **Schlauchklemme**
Hose clamp
Collier de serrage

(43) Veröffentlichungstag der Anmeldung: 27.03.2002
(73) Patentinhaber: Hans Oetiker AG Maschinen- und Apparatefabrik, 8812 Horgen (CH)
(72) Erfinder: Oetiker, Hans, 8812 Horgen (CH); Meier, Ulrich, 8820 Wädenswil (CH)
(74) Vertreter: Strehl Schübel-Hopf & Partner

(56) Entgegenhaltungen:
- EP-A- 0 697 554
- DE-A- 3 818 953
- US-A- 3 981 049
- US-A- 5 177 836
- US-A- 5 339 496

## Beschreibung

Aus US-A-5,177,836 oder aus US-A-5,339,496 ist eine Schlauchklemme mit den im ersten Teil des Anspruchs 1 angegebenen Merkmalen bekannt.

Eine ähnliche, aus US-A-4,299,012 bekannte Schlauchklemme hat sich wegen der Tatsache, daß ihre Innenfläche im gespannten Zustand keinerlei Lücken oder Stufen aufweist und daher den Schlauch an sämtlichen Stellen des Umfangs abstützt, auch zur Befestigung dünner, harter Schläuche an Rohrnippeln bewährt. Zum Spannen dient dabei die in der Fachwelt als "Oetiker-Ohr" bekannt gewordene ohrartige Formation, die nach Einhängen eines oder mehrerer auf dem inneren Bandteil vorgesehener Haken in entsprechende, im äußeren Bandteil vorhandene Öffnungen mit Hilfe einer Zange oder eines ähnlichen Werkzeugs verengt wird, um dadurch die Schlauchklemme in ihrem Durchmesser zu reduzieren und zwischen Schlauch und Rohrnippel einen ausreichenden Dichtungsdruck herbeizuführen.

Bei der bekannten Schlauchklemme greift die am inneren Bandende vorhandene Zunge im gespannten Zustand der Schlauchklemme in einen im äußeren Bandteil vorhandenen Zungenkanal ein, der durch Anbringen zweier paralleler, in Bandrichtung verlaufender Schlitze und Herausdrücken des mittleren Abschnitts gebildet ist. Der genannte mittlere Abschnitt verschließt den Zungenkanal von außen und verhindert, daß die Zunge über den Umfang des Bandes nach außen tritt.

Eine ähnliche Gestaltung ist aus US-A-4,711,001 bekannt. Auch dort ist der Zungenkanal durch den durch die beiden Längsschnitte gebildeten mittleren Teil nach außen hin abgedeckt, auch wenn dieser Teil an dem der Zungenspitze entsprechenden Ende des Kanals aus dem Bandmaterial freigestanzt ist.

Der Erfindung liegt die generelle Aufgabe zugrunde, Nachteile, wie sie bei verwandten Schlauchklemmen nach dem Stand der Technik auftreten, mindestens teilweise zu beseitigen. Eine speziellere Aufgabe der Erfindung kann darin gesehen werden, eine Schlauchklemme anzugeben, die bei geringem Fertigungsaufwand möglichst vielseitig verwendbar ist.

Die erfindungsgemäße Lösung dieser Aufgabe ist im Anspruch 1 gekennzeichnet. Bei der danach gestalteten Schlauchklemme entfällt die beim Stand der Technik zwischen Zunge und Kanal auftretende Reibung, die das Spannen der Schlauchklemme erschwert. Außerdem bleibt die Zunge sowohl im eingehängten als auch im gespannten Zustand der Klemme von außen her zugänglich, so daß ein an ihr vorgesehener, nach außen ragender Ansatz zur Handhabung der Klemme und zur Verbesserung ihrer Funktionsweise zur Verfügung steht.

Bei der Weiterbildung der Erfindung nach Anspruch 2 ergibt sich eine Führungsfunktion, die sicherstellt, daß die Zunge schon vor dem Spannen und insbesondere während des Spannens der Schlauchklemme auf den Zungenkanal ausgerichtet und damit bezüglich der Breite der Schlauchklemme zentrisch gehalten wird.

Die in Anspruch 3 angegebene Gestaltung verleiht dem Ansatz hohe Festigkeit insbesondere in Umfangsrichtung. Demgegenüber ist die Gestaltung nach Anspruch 4 in der Fertigung einfach, wobei sich die Festigkeit durch die Maßnahme des Anspruchs 5 erhöhen läßt. In jedem Fall ist die Weiterbildung der Erfindung nach Anspruch 6 günstig, da der Ansatz an der Zunge eine sichere Arretierung der Schlauchklemme im eingehängten Zustand maximalen Durchmessers vermittelt.

Die Maßnahmen nach Anspruch 7 sind zur Erzielung einer über den gesamten Umfang lücken- und stufenfreien Innenfläche der Schlauchklemme im gespannten Zustand von Bedeutung.

Bei Weiterbildung der Erfindung nach Anspruch 8 läßt sich die gespannte Schlauchmittel durch einfache Mittel wieder öffnen, wobei die Ansatz an der Zunge einerseits und eine Anformung am äußeren Bandteil andererseits als Eingriffsstellen für ein entsprechendes Werkzeug zur Verfügung stehen. Um ein Abrutschen dieses Werkzeugs zu vermeiden, ist die Gestaltung nach Anspruch 9 von Vorteil.

Bei gleichzeitiger Anwendung der Merkmale nach Anspruch 6 und 9 läßt sich die Schlauchklemme günstigerweise mit dem gleichen zangenartigen Werkzeug öffnen, das zum Schließen des "Oetiker-Ohrs" beim Spannen der Schlauchklemme benutzt wird.

Wird die Anformung nach Anspruch 10 und 11 als Haken mit der gleichen Form wie der zum Einhängen in die Öffnung am inneren Bandteil dienende Haken gestaltet, so führt dies zu einer Vereinfachung des Herstellwerkzeugs.

Die weitere Ausgestaltung der Erfindung nach Anspruch 12 und 13 führt zu der Möglichkeit, dieselbe Schlauchklemme für mehrere Durchmesser heranzuziehen. Gleichzeitig wird der elastische Bereich der Schlauchklemme erhöht. Da sich die nach Anspruch 12 vorgesehene Wellung im äußeren Bandteil zwischen der Öffnung und der ohrartigen Formation befindet, wird sie ebenso wie die ohrartige Formation selbst von der vollen Breite des inneren Bandteils überbrückt, so daß die durchgehende geschlossene Innenfläche der Schlauchklemme auch in diesem Bereich nicht beeinträchtigt ist.

Dabei läßt sich der Elastizitätsmodul durch die Maßnahmen der Ansprüche 14 und 15 bei gegebenem Bandmaterial verringern oder erhöhen.

Bevorzugte Ausführungsbeispiele der Erfindung werden nachstehend anhand der Zeichnungen näher erläutert; darin zeigt
- Fig. 1: eine perspektivische Darstellung einer Schlauchklemme gemäß einem Ausführungsbeispiel der Erfindung im offenen Zustand,
- Fig. 2: einen Teil der gleichen Schlauchklemme im eingehängten, aber noch nicht gespannten Zustand in Seitenansicht,
- Fig. 3: eine der Fig. 2 ähnliche Darstellung der Schlauchklemme im gespannten Zustand,
- Fig. 4: eine der Fig. 3 ähnliche Darstellung der Schlauchklemme beim Wiederöffnen, und
- Fig. 5: bis 7 perspektivische Teildarstellungen von Schlauchklemmen gemäß weiteren Ausführungsbeispielen der Erfindung.

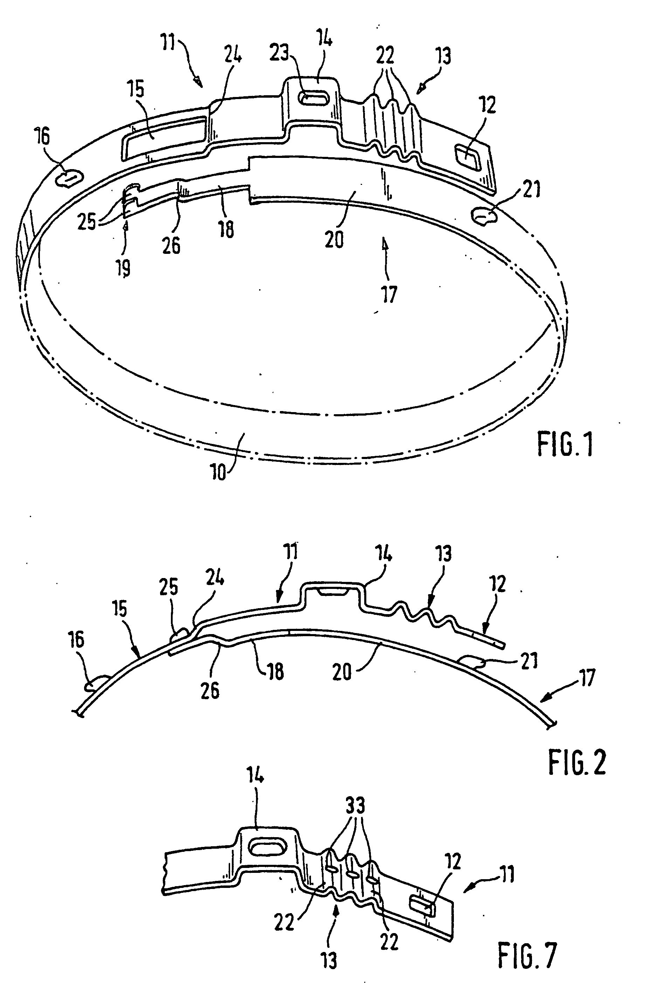

Die in Fig. 1 gezeigte offene Schlauchklemme ist aus einem Stahlband **10** einer Breite von beispielsweise 10 mm und einer Dicke von beispielsweise 1 mm gefertigt und zu der in Fig. 1 gezeigten Konfiguration vorgebogen. Der äußere Bandteil **11** weist, vom Bandende ausgehend, eine Öffnung **12**, eine Wellung **13**, eine nach außen springende ohrartige Formation in Form des so genannten "Oetiker-Ohrs" **14**, einen in Bandlängsrichtung verlaufenden Durchbruch **15** und einen Haken **16** auf. Der innere Bandteil **17** weist, vom Bandende ausgehend, eine Zunge **18** mit einem an ihrem Ende vorgesehenen Ansatz **19**, einen glatten Bandbereich **20** und einen Haken **21** auf.

Die in das Bandmaterial gestanzte Öffnung **12** ist im wesentlichen quadratisch mit einer Kantenlänge, die etwa gleich der Hälfte der Bandbreite ist.

Die Wellung **13** umfaßt in dem dargestellten Ausführungsbeispiel drei nebeneinanderliegende, quer zur Bandlängsrichtung verlaufende Wellen mit einem Intervall von etwa 5 mm und einer Wellenhöhe von etwa 3 mm.

Das insgesamt etwa umgekehrt U-förmige Ohr **14** hat eine Höhe von etwa 5 mm und eine Länge in Bandlängsrichtung von etwa 10 mm. In den oberen Steg des Ohrs **14** ist eine Verstärkungssicke **23** eingeprägt.

Der Durchbruch **15** liegt symmetrisch zur Bandmittellinie und hat in dem dargestellten Ausführungsbeispiel eine Breite von etwa 5 mm und eine Länge von etwa 10 mm. An dem dem Ohr **14** zugewandten Ende des Durchbruchs **15** ist in das Bandmaterial eine vom äußeren Bandende gesehen nach innen springende Stufe **24** eingeformt, deren Höhe im wesentlichen der Dicke des Bandes **10** entspricht.

Der Haken **16** ist durch Einstanzen eines kurzen, quer zur Bandrichtung verlaufenden und an seinen beiden Enden in Richtung des äußeren Bandendes umgelenkten Schnittes und Herausprägen des vom äußeren Bandende aus gesehen vor diesem Schnitt liegenden Bandmaterials gebildet. Aufgrund dieser Herstellweise hat der Haken **16** eine vom äußeren Bandende aus gesehen gewölbt ansteigende, am Beginn und seitlich mit dem Bandmaterial zusammenhängende Dachfläche, die an ihrer vom äußeren Bandende abgewandten Seite eine Hinterschneidung bildet und somit insgesamt eine Angriffsfläche ergibt, die unter einem Winkel von weniger als 90° zur Umfangsrichtung des Bandes **10** verläuft.

Die am inneren Bandteil **17** vorgesehene Zunge **18** hat eine Breite, die etwas geringer ist als die des Durchbruchs **15**.

Der Ansatz **19** am Zungenende besteht in dem Ausführungsbeispiel nach Fig. 1 aus zwei nach außen gekanteten und in Umfangsrichtung verlaufenden Lappen **25**, deren Höhe demjenigen Maß entspricht, um das die Zunge **18** gegenüber der vollen Breite des Bandes **10** reduziert ist. Wie dargestellt, sind die Lappen **25** am äußersten Zungenende verrundet, während sie an der der Zungenwurzel zugewandten Seite leicht hinterschnitten sind, so daß die von den beiden Lappen **25** gebildete Fläche mit der Bandumfangsrichtung einen Winkel von etwas weniger als 90° bildet.

Etwa in der Mitte ihrer Länge ist in die Zunge **18** eine Stufe **26** eingeformt, die vom inneren Bandende betrachtet nach innen springt und in ihrer Höhe im wesentlichen der Dicke des Bandes **10** entspricht.

In dem Ausführungsbeispiel nach Fig. 1 hat die Zunge **18** eine Länge von etwa 20 mm, während die in Umfangsrichtung gemessene Länge der Lappen **25** etwa 4 mm beträgt.

Der Haken **21** ist in gleicher Weise wie der Haken **16** durch Kaltverformung (Tiefziehen) gebildet und hat die gleiche Form, weist aber bezüglich des Hakens **16** in entgegengesetzte Richtung. Auch bei dem Haken **21** ist die vom inneren Bandende abgewandte Seite hinterschnitten und bildet mit der Umfangsrichtung der Schlauchklemme einen Winkel von weniger als 90°. Anders als bei den Schlauchklemmen nach US-A-4,299,012 und US-A-4,711,001 dient ein einziger Haken **21** zum Einführen in die Öffnung **12** beim Spannen und Schließen der Klemme sowie zur Aufnahme der Haltekräfte im geschlossenen Zustand. Dadurch wird eine Verkürzung der gesamten Bandlänge mit entsprechender Materialersparnis erreicht.

In dem in Fig. 2 dargestellten eingehängten Zustand greift der Haken **21** in die Öffnung **12** ein, wobei die hinterschnittene Fläche des Hakens **21** an der dem äußeren Bandende zugewandten Kante der Öffnung **12** anliegt. In diesem Zustand greift der von den beiden Lappen **25** gebildete Ansatz **19** der Zunge **18** in den Durchbruch **15** ein.

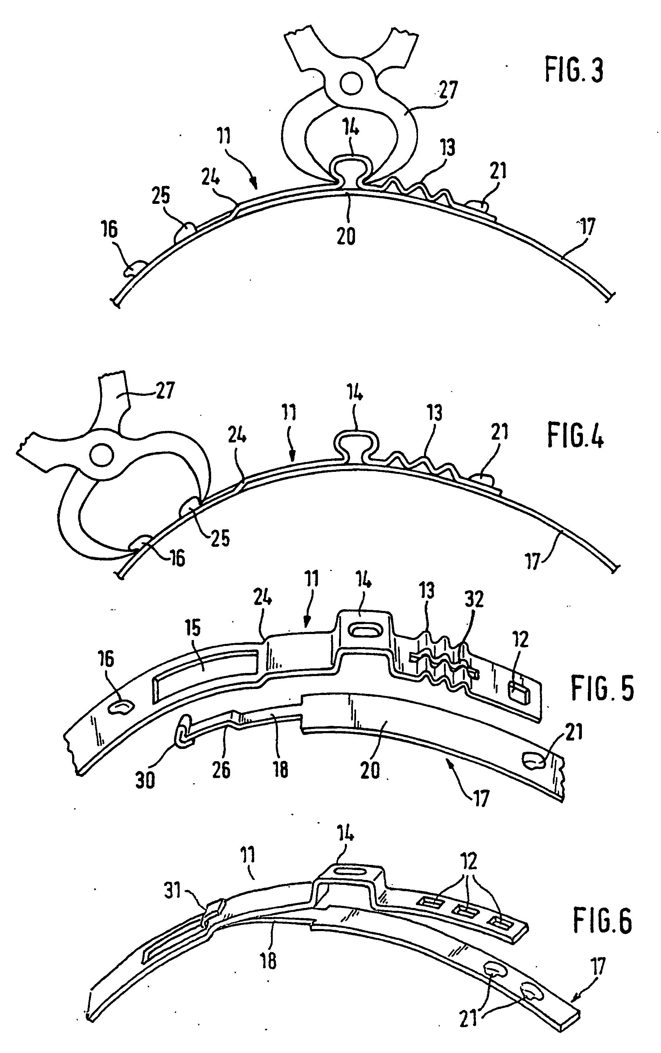

Zum Spannen der Schlauchklemme wird das Ohr **14** mittels der in Fig. 3 angedeuteten Zange 27 verengt, wodurch die Schlauchklemme in ihrem Umfang reduziert wird. Bei diesem Spannvorgang zieht sich die Öffnung **12** mit ihrer dem äußeren Bandende zugewandten Innenkante fest in den Haken **21** hinein, während sich die Zunge **18** durch den Durchbruch **15** mindestens so weit verschiebt, daß die in die Zunge **18** eingeformte Stufe **26** über die am Beginn des Durchbruch **15** vorhandene Stufe **24** hinaus verschiebt. Die beiden Stufen **24**, **26** bewirken, daß in dem in Fig. 3 gezeigten gespannten Zustand die Innenfläche der Schlauchklemme durchgehend glatt ist und an keiner Stelle eine quer zur Bandrichtung durchgehende Aussparung, Vertiefung oder Erhöhung bildet, so daß über den gesamten Umfang ein gleichmäßiger Druck auf den (nicht gezeigte) Schlauch ausgeübt wird.

Der am Ende der Zunge **18** vorhandene Ansatz **19** bewirkt, daß die Zunge **18** bereits in dem in Fig. 2 gezeigten lose eingehängten Zustand und insbesondere beim Spannvorgang in dem Durchbruch **15** gehalten wird. Dadurch wird sichergestellt, daß sich die beiden Bandteile **11, 17** nicht quer zur Bandrichtung gegeneinander verschieben können.

Beim Spannen der Schlauchklemme können die Wellen **22** auseinandergezogen werden. Dieser Effekt hat nicht nur Einfluß auf die Elastizität der Schlauchklemme sondern ergibt auch den Vorteil, daß die gleiche Schlauchklemme ― bei entsprechender Länge des Durchbruchs **15** und der Zunge **18** ― für unterschiedliche Nenndurchmesser verwendbar ist.

Wie in Fig. 4 dargestellt, läßt sich die gespannte Schlauchklemme dadurch öffnen, daß die gleiche Zange **27**, wie sie zum Spannen verwendet wird, mit ihren beiden Backen an dem Ansatz **19** der Zunge **18** und dem am äußeren Bandteil vorhandenen Haken **16** angesetzt wird. Bei diesem Vorgang wird unter Ausnutzung der Elastizität der Wellung **13** und/oder des Ohrs **14** die Öffnung **12** außer Eingriff mit dem Haken **21** gebracht, so daß sich die Schlauchklemme lösen und entfernen läßt.

Die in Fig. 5 gezeigte Schlauchklemme unterscheidet sich von dem Ausführungsbeispiel nach Fig. 1 bis 4 dadurch, daß der am Ende der Zunge **18** vorgesehene Ansatz **30** in dem hakenförmig nach außen gebogenen Ende der Zunge **18** besteht. Wie dargestellt, ist dieses hakenförmige Ende zur Versteifung auf sich selbst zurückgefaltet, wobei das Bandmaterial noch ein kurzes Stück parallel zu dem in Umfangsrichtung weisenden Zungenende verlaufen kann. Die dadurch bewirkte Verdickung des Zungenendes wird von der in der Zunge **18** gebildeten Stufe **26** aufgenommen, so daß sie im gespannten Zustand der Schlauchklemme nicht störend nach innen vorspringt.

Der hakenförmige Ansatz **30** des Ausführungsbeispiels nach Fig. 5 hat die gleiche Funktion wie die beiden Lappen **25** der Schlauchklemme nach Fig. 1 bis 4. Er dient einerseits zur Führung der Zunge **18** innerhalb des Durchbruchs **15** und andererseits zum Lösen der gespannten Schlauchklemme mit Hilfe der Zange **27**. Um ein Abrutschen des betreffenden Zangenbackens zu vermeiden, ist der hakenförmige Ansatz **30** so gebogen, daß seine vom inneren Bandende abgewandte Fläche mit der Umfangsrichtung der Schlauchklemme einen Winkel von weniger als 90° bildet.

In der weiteren Variante nach Fig. 6 bei der die Stufe 26 nicht gezeigt ist, besteht der an der Zunge **18** vorgesehene Ansatz **31** aus dem um im wesentlichen 180° U-förmig zurückgebogenen Ende der Zunge und dient neben einer Führung der Zunge **18** innerhalb des Durchbruchs **15** dazu, sich im eingehängten Zustand der Schlauchklemme an der dem äußeren Bandende, im Bereich der Stufe **24** gelegenen Kante des Durchbruchs **15** einzuhaken und dadurch den eingehängten Zustand zu sichern.

Die Schlauchklemme nach Fig. 6 unterscheidet sich von der nach Fig. 1 bis 5 auch dadurch, daß der äußere Bandteil **11** nicht eine einzige Öffnung **12** sondern deren drei und der innere Bandteil **17** nicht einen einzigen Haken **21,** sondern deren zwei aufweist. Der Abstand der beiden Haken **21** ist gleich dem Abstand der Öffnungen **12**. Dadurch, daß zwei Haken **21** in zwei Öffnungen **12** eingreifen, erhöht sich die gesamte Haltekraft der Schlauchklemme im gespannten Zustand. Ferner läßt sich aufgrund der Tatsache, daß mehr Öffnungen **12** als Haken **21** vorhanden sind, die Schlauchklemme für unterschiedliche Durchmesser, im gezeigten Ausführungsbeispiel für zwei verschiedene Durchmesser, verwenden.

Die gleiche Möglichkeit, mehrere Öffnungen **12** und mehrere Haken **21** vorzusehen, besteht auch bei den Schlauchklemmen nach Fig. 1 bis 5.

Ferner ist in Fig. 6 angenommen, daß die Schlauchklemme im Unterschied zu der nach Fig. 1 bis 5 keine Wellung aufweist.

Bei der in Fig. 5 gezeigten Schlauchklemme ist der mit der Wellung **13** versehene Bandabschnitt mit einem in Umfangsrichtung verlaufenden Schlitz **32** versehen, der die wirksame Breite des Bandes **10** in diesem Bereich verringert und daher die Elastizität der Wellung **13** erhöht.

Der gegenteilige Effekt läßt sich dadurch erreichen, daß die Wellen **22** gemäß Fig. 7 mit Sicken **33** verformt werden, wodurch die gesamte Wellung **13** weniger nachgiebig wird.

## Patentansprüche

1. Offene Schlauchklemme mit einander überlappenden Bandenden, wobei
der äußere Bandteil **(11)**, ausgehend vom äußeren Bandende, eine Öffnung **(12)**, eine ohrartige Formation **(14)** zum Spannen der Schlauchklemme durch Verkürzen der Bandlänge, und einen in Bandlängsrichtung verlaufenden offenen Durchbruch **(15)** aufweist, und
der innere Bandteil **(17),** ausgehend vom inneren Bandende, eine im gespannten Zustand der Schlauchklemme in den Durchbruch **(15)** eingreifende Zunge **(18)** mit einem durch den Durchbruch **(15)** nach außen ragenden Ansatz **(19, 30, 31)**, einen den Bereich unter der ohrartigen Formation **(14)** überbrückenden Bereich **(20)**, und einen Haken **(21)** zum Einhängen in die Öffnung **(12)** aufweist,
**dadurch gekennzeichnet, daß** die Breite der Zunge **(18)** geringer ist als die des Durchbruchs **(15)**, und daß die Zunge **(18)** eine vom inneren Bandende gesehen nach innen springende Stufe **(26)** aufweist, deren Höhe im wesentlichen gleich der Dicke des Bandmaterials ist und die im gespannten Zustand der Schlauchklemme im Bereich des Durchbruchs **(15)** liegt.

2. Schlauchklemme nach Anspruch 1, wobei der Ansatz **(19, 30, 31)** an der Zunge **(18)** im wesentlichen die Breite des Durchbruchs **(15)** hat.

3. Schlauchklemme nach Anspruch 1 oder 2, wobei der Ansatz **(19)** an der Zunge **(18)** zwei an beiden Seiten der Zunge **(18)** in Radialrichtung der Schlauchklemme nach außen gebogene Lappen **(25)** umfaßt.

4. Schlauchklemme nach einem der vorhergehenden Ansprüche, wobei der Ansatz **(30, 31)** an der Zunge **(18)** das nach außen gebogene Ende der Zunge (18) umfaßt.

5. Schlauchklemme nach einem der vorhergehenden Ansprüche, wobei der Ansatz **(30)** an der Zunge **(18)** eine aus dem Material der Zunge **(18)** gebildete Falte umfaßt.

6. Schlauchklemme nach einem der vorhergehenden Ansprüche, wobei die vom äußeren Bandende abgewandte Seite des Ansatzes **(19, 30)** an der Zunge **(18)** mit der Umfangsrichtung der Schlauchklemme einen Winkel von höchstens 90° bildet.

7. Schlauchklemme nach einem der vorhergehenden Ansprüche, wobei der äußere Bandteil **(11)** nahe dem seinem Bandende zugewandten Ende des Durchbruchs **(15)** eine vom äußeren Bandende gesehen nach innen springende Stufe **(24)** aufweist, deren Höhe im wesentlichen gleich der Dicke des Bandmaterials ist.

8. Schlauchklemme nach einem der vorhergehenden Ansprüche, wobei der äußere Bandteil **(11)** auf der vom äußeren Bandende abgewandten Seite des Durchbruchs **(15)** eine nach außen ragende Anformung **(16)** aufweist.

9. Schlauchklemme nach Anspruch 8, wobei die vom äußeren Bandende abgewandte Seite der Anformung **(16)** mit der Umfangsrichtung der Schlauchklemme einen Winkel von höchstens 90° bildet.

10. Schlauchklemme nach Anspruch 8 oder 9, wobei die Anformung als Haken **(16)** ausgebildet ist.

11. Schlauchklemme nach Anspruch 10, wobei der von der Anformung gebildete Haken **(16)** die gleiche Form hat wie der am inneren Bandteil **(17)** vorgesehene Haken **(21)**.

12. Schlauchklemme nach einem der vorhergehenden Ansprüche, wobei der äußere Bandteil **(11)** zwischen der Öffnung **(12)** und der ohrartigen Formation (**14**) einen gewellten Bereich (**13**) aufweist.

13. Schlauchklemme nach Anspruch 12, wobei der gewellte Bereich **(13)** mehrere Wellen **(22)** umfaßt.

14. Schlauchklemme nach Anspruch 12 oder 13, wobei der gewellte Bereich (**13**) mit einem in Bandlängsrichtung verlaufenden Schlitz (**32**) versehen ist.

15. Schlauchklemme nach Anspruch 12 oder 13, wobei der gewellte Bereich **(13)** mit einer in Bandlängsrichtung verlaufenden Sicke **(33)** versehen ist.

## Claims

1. An open hose clamp with mutually overlapping band ends, wherein
the outer band portion **(11)** comprises, starting from the outer band end, an opening **(12)**, an ear-shaped formation **(14)** for tightening the hose clamp by shortening the band length, and a channel **(15)** extending in the longitudinal direction of the band, and
the inner band portion **(17)** comprises, starting from the inner band end, a tongue **(18)** which engages in the channel **(15)** when the hose clamp is in the tightened state, the tongue having an attachment **(19, 30, 31)** projecting outward through the aperture **(15)**, an area **(20)** spanning the area under the ear-shaped formation **(14)**, and a hook **(21)** for insertion into the opening **(12)**,
**characterized in that** the width of the tongue **(18)** is smaller than that of the channel **(15)**, and that the tongue **(18)** comprises a step **(26)** which protrudes inward, as seen from the inner band end, and the height of the tongue being substantially equal to the thickness of the band material, the tongue lying in the area of the aperture **(15)** when the hose clamp is in the tightened state.

2. The hose clamp of claim 1, wherein the attachment **(19, 30, 31)** on the tongue **(18)** has substantially the width of the aperture (**15**).

3. The hose clamp of claim 1 or 2, wherein the attachment **(19)** on the tongue **(18)** has tabs **(25)** on both sides of the tongue **(18)**, the tabs being bent outward in the radial direction of the hose clamp.

4. The hose clamp of any preceding claim, wherein the attachment **(30, 31)** on the tongue **(18)** includes the outward bent end of the tongue **(18)**.

5. The hose clamp of any preceding claim, wherein the attachment **(30)** on the tongue **(18)** includes a fold formed from the material of the tongue **(18).**

6. The hose clamp of any preceding claim, wherein the side of the attachment **(19, 30)** on the tongue **(18)** remote from the outer band end forms an angle of at most 90° with the circumferential direction of the hose clamp.

7. The hose clamp of any preceding claim, wherein the outer band portion **(11)** comprises, near the end of the aperture **(15)** facing its band end, a step **(24)** which protrudes inward, as seen from the outer band end, the height of the step being substantially equal to the thickness of the band material.

8. The hose clamp of any preceding claim, wherein the outer band portion **(11)** comprises an outward protruding formation **(16)** arranged on the side of the aperture **(15)** remote from the outer band end.

9. The hose clamp of claim 8, wherein the side of the formation **(16)** remote from the outer band end forms an angle of at most 90° with the circumferential direction of the hose clamp.

10. The hose clamp of claim 8 or 9, wherein the formation is designed as a hook **(16)**.

11. The hose clamp of claim 10, wherein the hook **(16)** formed by the formation has the same shape as the hook **(21)** provided on the inner band portion **(17)**.

12. The hose clamp of any preceding claim, wherein the outer band portion **(11)** has an undulated band area **(13)** between the opening **(12)** and the ear-shaped formation **(14)**.

13. The hose clamp of claim 12, wherein the undulated band area **(13)** comprises a plurality of waves **(22)**.

14. The hose clamp of claim 12 or 13, wherein the undulated band area **(13)** is provided with a slot **(32)** extending in the longitudinal direction of the band.

15. The hose clamp of claim 12 or 13, wherein the undulated band area **(13)** is provided with a bead **(33)** extending in the longitudinal direction of the band.

## Revendications

1. Collier de serrage ouvert avec extrémités de bande se recouvrant, dans lequel
la partie de bande extérieure (11), partant de l'extrémité de bande extérieure, présente une ouverture (12), une formation (14) de type oreille pour serrer le collier de serrage en raccourcissant la longueur de la bande, ainsi qu'un ajour (15) s'étendant dans la direction longitudinale de la bande, et
la partie de bande intérieure (17), partant de l'extrémité de bande intérieure, comporte une languette (18) s'engageant, à l'état tendu du collier de serrage, dans l'ajour (15), avec un appendice (19, 30, 31) s'étendant vers l'extérieur à travers l'ajour (15), une zone (20) comptant la zone au-dessous de la formation (14) de type oreille, ainsi qu'un crochet (21) destiné à s'accrocher dans l'ouverture (12),
**caractérisé en ce que** la largeur de la languette (18) est inférieure à celle de l'ajour (15), et **en ce que** la languette (18) présente un gradin (26) en retrait vers l'intérieur, vu depuis l'extrémité intérieure de la bande, dont la hauteur est sensiblement égale à l'épaisseur du matériau de la bande et qui, à l'état tendu du collier de serrage, se situe dans la zone de l'ajour (15).

2. Collier de serrage selon la revendication 1, dans lequel l'appendice (19, 30, 31) présente, sur la languette (18), sensiblement la largeur de l'ajour (15).

3. Collier de serrage selon la revendication 1 ou 2, dans lequel l'appendice (19) sur la languette (18) comprend deux pattes recourbées vers l'extérieur dans la direction radiale du collier de serrage, sur les deux côtés de la languette (18).

4. Collier de serrage selon l'une des revendications précédentes, dans lequel l'appendice (30, 31) sur la languette (18) comprend l'extrémité repliée vers l'extérieur de la languette (18).

5. Collier de serrage selon l'une des revendications précédentes, dans lequel l'appendice (30) sur la languette (18) comprend un pli formé dans le matériau de la languette (18).

6. Collier de serrage selon l'une des revendications précédentes, dans lequel le côté, tourné à l'opposé de l'extrémité extérieure de la bande, de l'appendice (19, 30) sur la languette (18), forme un angle de 90° au plus avec la direction périphérique du collier de serrage.

7. Collier de serrage selon l'une des revendications précédentes, dans lequel la partie de bande extérieure (11) présente, à proximité de l'extrémité de l'ajour (15) tournée vers son extrémité de bande, un gradin (24) en retrait vers l'intérieur, vu depuis l'extrémité de bande extérieure, dont la hauteur est sensiblement égale à l'épaisseur du matériau de la bande.

8. Collier de serrage selon l'une des revendications précédentes, dans lequel la partie de bande extérieure (11) présente, sur le côté de l'ajour (15) tourné à l'opposé de l'extrémité de bande extérieure, un bossage (16) dirigé vers l'extérieur.

9. Collier de serrage selon la revendication 8, dans lequel le côté du bossage (16), tourné à l'opposé de l'extrémité de bande extérieure, forme avec la direction périphérique du collier de serrage un angle de 90° au plus.

10. Collier de serrage selon la revendication 8 ou 9, dans lequel le bossage est réalisé comme crochet (16).

11. Collier de serrage selon la revendication 10, dans lequel le crochet (16) formé par le bossage présente la même forme que le crochet (21) prévu sur la partie de bande intérieure (17).

12. Collier de serrage selon l'une des revendications précédentes, dans lequel la partie de bande extérieure (11) présente une zone (13) ondulée entre l'ouverture (12) et la formation (14) de type oreille.

13. Collier de serrage selon la revendication 12, dans lequel la zone ondulée (13) comprend plusieurs ondulations (22).

14. Collier de serrage selon la revendication 12 ou 13, dans lequel la zone ondulée(13) est pourvue d'une fente (32) s'étendant dans la direction longitudinale de la bande.

15. Collier de serrage selon la revendication 12 ou 13, dans lequel la zone ondulée (13) est pourvue d'une moulure (33) s'étendant dans la direction longitudinale de la bande.
